# FASCICULE DE BREVET EUROPEEN

(11) **EP 0 792 830 B1**
(45) Date de publication et mention de la délivrance du brevet: **27.11.2002**
(21) Numéro de dépôt: 97400418.6
(22) Date de dépôt: 26.02.1997
(51) Int. Cl.: B65H 27/00, F16C 13/02

(54) **Dispositif de guidage à rouleau rotatif**
Rollenführungseinrichtung
Guiding device with rollers

(30) Priorité: 27.02.1996 FR 9602378
(43) Date de publication de la demande: 03.09.1997
(73) Titulaire: ASSELIN, F-76500 Elbeuf (FR)
(72) Inventeur: Jourde, Bernard, 76500 Elbeuf (FR)
(74) Mandataire: Pontet, Bernard

(56) Documents cités:
- WO-A-93/08110
- DE-A- 2 454 902
- DE-A- 2 912 990
- DE-B- 2 843 204
- US-A- 4 010 528
- US-A- 4 472 155

## Description

La présente invention concerne un dispositif de guidage à rouleau rotatif, destiné notamment à guider avec précision les matériaux en bande de grande largeur, notamment les voiles ou nappes textiles. Outre la fonction de guidage, le rouleau peut avoir une fonction d'entraînement, de freinage ou encore présenter une paroi extérieure configurée de manière particulière, par exemple avec des dents ou des lamelles, pour appliquer un traitement spécifique au matériau passant par le dispositif de guidage.

Le guidage de tels matériaux, dont la largeur peut atteindre plusieurs mètres, parfois plus de dix mètres, pose des problèmes car les rouleaux de guidage peuvent fléchir ou vibrer et cela est nuisible à la qualité du processus industriel subi par le matériau.

On connaît dans l'art antérieur des dispositifs de guidage à rouleau rotatif segmenté.

Le DE-2 912 990 (VOITH) concerne un rouleau écarteur de bande, formé de rouleaux élémentaires successifs. Les rouleaux élémentaires sont montés mobiles en rotation autour d'un support commun. Lesdits rouleaux élémentaires sont indépendants les uns des autres, à la fois axialement et angulairement.

Le US-4 472 155 (GREDING) concerne un assemblage de cylindres pour le bobinage de rouleaux de papier, formé d'au moins deux cylindres alignés axialement. L'accouplement entre deux cylindres successifs est réalisé au moyen d'un élément déformable interposé entre les extrémités adjacentes des deux cylindres, permettant la transmission des forces de torsion entre les deux cylindres. L'élément élastique étant par nature déformable, l'alignement axial des cylindres n'est pas optimisé, ni même recherché.

Ces dispositifs connus nécessitent entre les segments successifs un écart axial important.

Le but de la présente invention est de proposer un dispositif de guidage à rouleau rotatif permettant une excellente rectilinéarité du rouleau même si sa longueur axiale est très importante, et avec un très faible intervalle axial entre les parois périphériques des segments successifs.

Suivant l'invention, le dispositif de guidage à rouleau rotatif, comprenant un rouleau supporté en rotation relativement à un bâti au moyen de paliers et dont la paroi extérieure est destinée à soutenir un matériau, notamment une bande textile, dans une première région angulaire autour de l'axe du rouleau, le rouleau étant subdivisé en segments tubulaires successifs coaxiaux ayant un intervalle axial entre leurs parois périphériques, les paliers comprenant, à au moins une jonction entre deux segments adjacents, un palier intermédiaire, ayant une bague intérieure supportée par l'un au moins des deux flasques intérieurs prévus dans les extrémités axiales des deux segments adjacents et une bague extérieure supportée, au moins indirectement, par une lunette mince prolongée radialement vers l'extérieur, jusqu'à un organe de fixation en passant à travers ledit intervalle axial dans une seconde région angulaire autour de l'axe du rouleau, caractérisé en ce que les segments sont fixés entre eux par leurs flasques intérieurs et en ce que le palier intermédiaire est logé radialement à l'intérieur de la paroi périphérique de l'un au moins des segments tubulaires.

L'intervalle axial entre les segments tubulaires successifs peut être extrêmement réduit, juste suffisant pour permettre le passage de la lunette entre sa région radialement intérieure aux segments, qui soutient la bague extérieure du palier, et sa région radialement extérieure par laquelle elle est fixée au bâti du dispositif. La lunette peut être très mince, par exemple être plane et réalisée en tôle. Le palier est réalisé à l'intérieur des segments tubulaires et seule la lunette s'étend radialement vers l'extérieur pour assurer la liaison avec le bâti.

Le petit intervalle axial qui subsiste entre deux segments tubulaires est sans incidence sur la qualité du guidage et/ou traitement assuré par le rouleau, par comparaison avec un rouleau qui serait réalisé d'une seule pièce. Il est possible de donner aux segments la longueur axiale que l'on estime appropriée en fonction de la distance axiale qui est nécessaire entre les paliers successifs pour assurer la précision de guidage voulue.

D'autres particularités et avantages de l'invention ressortiront encore de la description ci-après, relative à un exemple non-limitatif.

Aux dessins annexés :
- la figure 1 est une vue en perspective d'un dispositif de guidage selon l'invention ;
- la figure 2 est une vue schématique en bout ;
- la figure 3 est une vue en coupe axiale partielle du dispositif des figures 1 et 2, à échelle agrandie ;

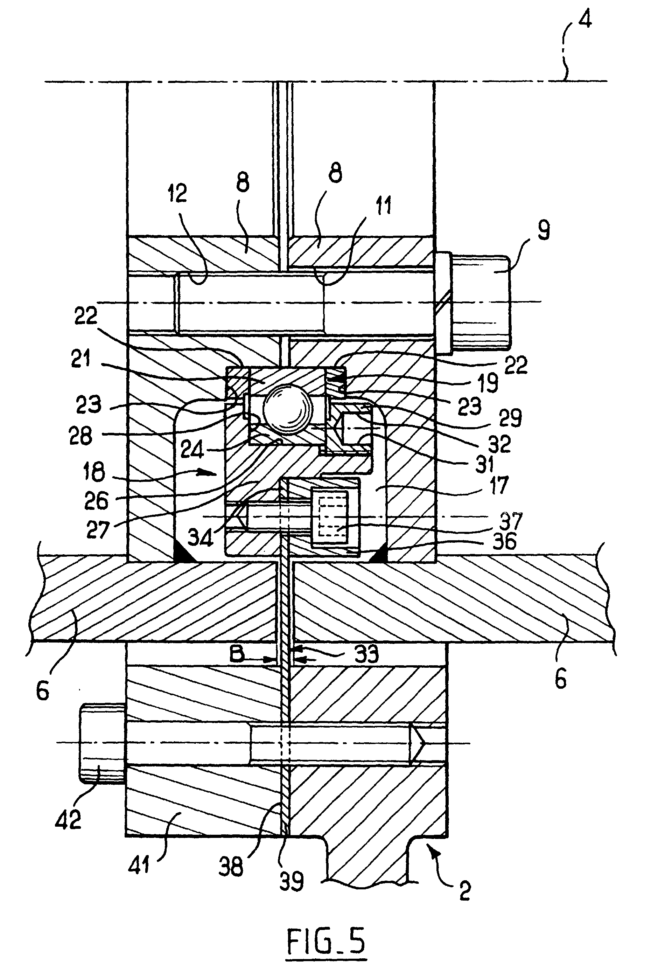

- la figure 4 est une vue en coupe et perspective, schématique, montrant l'intérieur du rouleau ; et
- la figure 5 est un détail de la figure 3, à échelle agrandie.

Dans l'exemple représenté aux figures, le dispositif de guidage comprend un rouleau rotatif 1 supporté en rotation relativement à un bâti 2 qui peut être le bâti d'une machine textile et qui n'est que partiellement représenté.

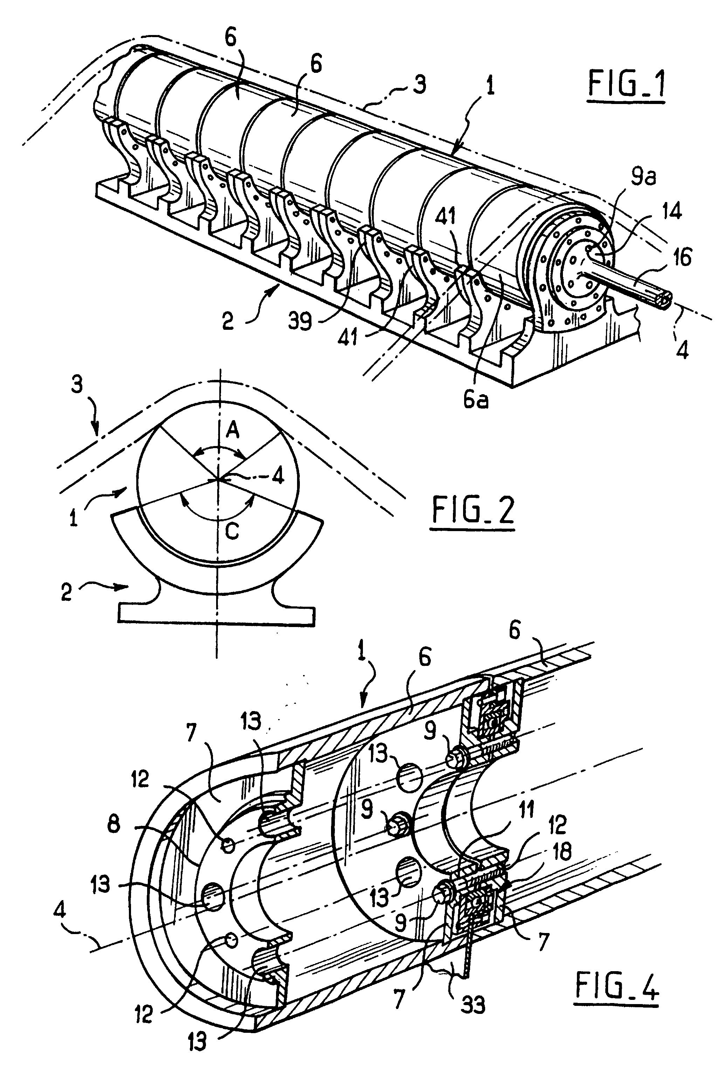

Le rouleau 1 est destiné à guider, entraîner et/ou traiter un matériau en bande 3 visualisé en trait mixte aux figures 1 à 3. Comme le montre la figure 2, le matériau 3 est en contact le long d'une première région angulaire prédéterminée A avec le rouleau 1 autour de l'axe 4 du rouleau.

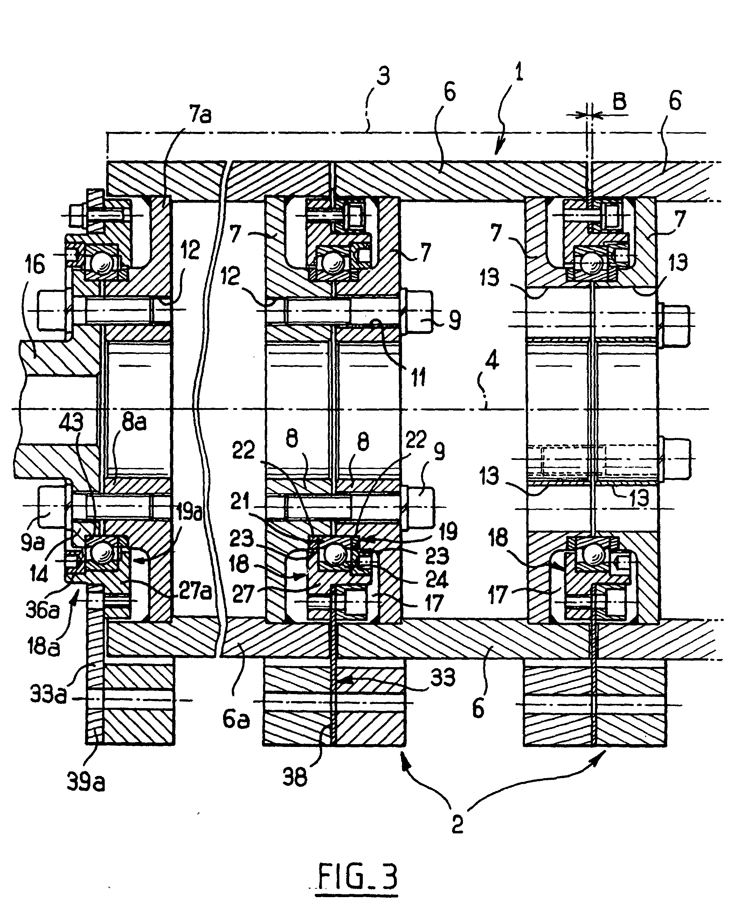

Suivant l'invention, le rouleau 1 est constitué de segments tubulaires 6 identiques et coaxiaux qui se succèdent le long de l'axe 4. Il y a un intervalle axial B (figure 3) entre les extrémités axiales voisines appartenant à chaque paire de segments 6 voisins.

Chaque segment 6 porte dans chacune de ses extrémités axiales un flasque intérieur 7 de forme générale annulaire qui est soudé à la périphérie intérieure du segment 6. Le long de leur pourtour intérieur, les flasques 7 sont axialement plus épais pour former un embout cylindrique 8 orienté axialement vers l'extérieur du segment 6 donc vers le flasque 7 du segment 6 voisin. Les segments 6 successifs sont fixés les uns aux autres par leurs flasques intérieurs 7 adjacents. Pour cela, des vis 9 réparties autour de l'axe 4 traversent des trous lisses 11 de l'un des flasques et se vissent dans des trous filetés 12 de l'autre flasque. Les trous 11 et 12 sont pratiqués parallèlement à l'axe 4 à travers les embouts cylindriques 8.

Le flasque intérieur 7 muni des trous filetés 12 comporte, entre ceux-ci, des lumières 13. Dans chaque segment tubulaire 6, les trous lisses 11 prévus sur l'un des flasques intérieurs 7 sont alignés axialement avec les lumières 13 de l'autre flasque 7. Grâce à cette particularité, le rouleau 1 peut aisément être assemblé de proche en proche à partir de la gauche de la figure 3. Pour cela, on place chaque nouveau segment tubulaire 6 de façon que son flasque 7 équipé des trous lisses 11 soit du côté déjà construit (côté gauche de la figure 3). Chaque vis 9 peut alors être vissée au moyen d'un outil introduit depuis la droite de la figure 3 à travers la lumière 13 correspondante de l'autre flasque 7 du segment tubulaire 6 en train d'être monté.

Pour simplifier la fabrication, les flasques 7 peuvent comme représenté être tous quasi-identiques, et notamment tous présenter des lumières 13. La seule différence entre eux tient à la présence de trous lisses ou au contraire filetés. Au montage, les deux flasques de chaque segment sont décalés angulairement l'un par rapport à l'autre pour aligner les trous lisses 11 avec les lumières 13 de l'autre flasque.

Dans l'exemple représenté à la figure 3, le segment tubulaire 6a de l'extrémité du rouleau 1 est particulier en ce que son flasque 7a de gauche, donc adjacent à l'extrémité du rouleau 1, comporte lui aussi des trous filetés 12 au lieu de trous lisses. Le flasque 7a est assemblé à une bride d'extrémité 14 au moyen de vis 9a engagées axialement depuis l'extérieur du rouleau 1. La bride d'extrémité 14 appartient à un arbre 16 relié par exemple à une source motrice. En outre, le segment tubulaire 6a n'a pas besoin de comporter de lumières 13.

A chaque jonction entre deux segments tubulaires 6, ou 6 et 6a, successifs, un logement annulaire 17 se trouve défini autour de l'axe 4 entre les flasques intérieurs 7, et radialement entre les embouts 8 et la paroi radialement intérieure des deux segments 6. Chaque logement 17 reçoit un palier 18 comprenant un roulement à billes 19 dont une bague intérieure 21 est emmanchée sur la paroi extérieure cylindrique des deux embouts 8. La bague 21 chevauche les deux embouts 8 et assure ainsi un centrage mutuel des deux flasques, donc des deux segments 6. La bague intérieure 21 est pincée entre deux épaulements 23 des deux flasques intérieurs 7 par l'entremise de deux cales d'épaisseur 22, et sous l'action de serrage exercée par les vis 9. Lorsque les vis 9 sont à l'état serré, il y a un intervalle axial libre entre les deux embouts 8 pour que le serrage s'exerce sur les cales 22.

La bague extérieure 24 du roulement 19 est emmanchée dans un contre-alésage 26 d'un anneau 27. La bague extérieure 24 est tenue axialement entre un épaulement 28 terminant le contre-alésage 26 et une rondelle d'arrêt 29 vissée dans l'entrée 31 du contre-alésage 26. La rondelle 29 présente des cavités 32 pour donner prise à un outil de serrage de la rondelle 29 dans l'entrée 31.

Une lunette plane 33 en tôle d'acier, comporte une région radialement intérieure 34 située dans le logement 17 et qui est pincée au moyen de vis de serrage 37 entre une aile radialement extérieure de l'anneau 27 et un contre-anneau 36. La lunette 33 est réalisée en une tôle très mince, dont l'épaisseur est de préférence égale à 3mm au maximum.

Dans une deuxième région angulaire C (figure 2) autour de l'axe 4, qui ne comporte aucun chevauchement avec la première région A dans laquelle le rouleau 1 supporte le matériau 3, la lunette 33 s'étend radialement vers l'extérieur à travers l'intervalle B entre les parois périphériques des deux segments 6, jusqu'à une région 38 formant patte de fixation située radialement à l'extérieur du rouleau 1. La patte 38 est fixée par des vis de serrage 42 entre une platine 39 en forme d'arc de cercle solidaire du bâti 2 et un sabot 41 de même forme. La périphérie intérieure de la platine 39 et du sabot 41 est radialement aussi proche que possible de la paroi périphérique extérieure du rouleau 1 pour réduire les possibilités de flexion de la lunette 33. Pour la même raison, les parois périphériques extérieures de l'anneau 27 et du contre-anneau 36 sont aussi proches que possible de la périphérie intérieure des segments 6. La dimension axiale de l'intervalle B est juste suffisante pour le passage de la lunette 33 avec un jeu raisonnable pour la rotation des segments 6 par rapport à la lunette fixe 33. De préférence, la dimension axiale de l'intervalle B est comprise entre 2mm et 4mm, choisie en fonction de l'épaisseur de la lunette 33 de manière que le jeu doit d'environ 0,5mm de chaque côté de la lunette.

Comme le montre la figure 3, la lunette 33 est engagée dans l'intervalle B même dans les régions angulaires qui ne s'étendent pas jusqu'à la patte de fixation 38, et notamment dans la région A. Ceci rend plus précis le positionnement de la lunette 33 dans un plan perpendiculaire à l'axe 4, et empêche toute flexion de la lunette dans les régions angulairement éloignées de la patte de fixation 38. En outre, de cette façon, la lunette forme joint entre les segments, pour empêcher ou freiner la pénétration des fibres textiles vers les paliers. Toutefois dans la région A et même dans les régions angulaires autres que A et C, la périphérie extérieure et la lunette 33 est suffisamment proche de l'axe 4 pour ne pas risquer d'interférer avec le matériau 3 pendant le fonctionnement.

En service, le rouleau 1 ne peut pratiquement pas fléchir car il est soutenu à intervalles axiaux réguliers, choisis aussi petits qu'on le souhaite, par les paliers intermédiaires 18, dont la bague radialement extérieure 24 est positionnée fixement par la lunette 33 par l'intermédiaire de l'anneau 27 et du contre-anneau 36.

Comme le montre la figure 3, un palier 18a peut également être prévu à l'extrémité du rouleau 1, avec un palier à roulement 19a dont la bague intérieure est emmanchée sur l'embout cylindrique 8a du flasque 7a et sur une portée cylindrique 43 de la bride 14. La bague extérieure du roulement 19a est tenue entre un anneau 27a et un contre-anneau 36a accessible de l'extérieur du rouleau. Toutefois, l'aile radialement extérieure de l'anneau 27a est fixée non plus à une lunette mince, mais à une lunette nettement plus épaisse 33a dont une partie radialement extérieure est fixée à une platine 39a du bâti 2.

De manière semblable, un palier peut être prévu à l'autre extrémité du rouleau 1, mais il est directement adaptable à un segment 6 dont le flasque de gauche comporte des trous lisses.

Bien entendu, l'invention n'est pas limitée à l'exemple décrit et représenté.

On pourrait par exemple prévoir qu'à chaque jonction les deux flasques 7 sont fixés l'un à l'autre par l'intermédiaire d'une pièce de liaison et de centrage.

On pourrait également prévoir que les deux flasques d'une jonction comportent des moyens de centrage mutuel. Il est possible qu'un seul des deux flasques comporte une surface de centrage pour la bague intérieure du roulement. De même le montage de la bague extérieure du roulement n'est pas limité à la solution représentée. L'anneau de soutien pourrait être solidaire, par exemple soudé, à la périphérie intérieure de la lunette.

## Revendications

1. Dispositif de guidage à rouleau rotatif, comprenant un rouleau (1) supporté en rotation relativement à un bâti (2) au moyen de paliers (18, 18a) et dont la paroi extérieure est destinée à soutenir un matériau (3), notamment une bande textile, dans une première région angulaire (A) autour de l'axe (4) du rouleau (1), le rouleau (1) étant subdivisé en segments tubulaires successifs coaxiaux (6) ayant un intervalle axial (B) entre leurs parois périphériques, les paliers comprenant, à au moins une jonction entre deux segments adjacents (6), un palier intermédiaire (18), ayant une bague intérieure (21) supportée par l'un au moins de deux flasques intérieurs (7) prévus dans les extrémités axiales des deux segments adjacents (6) et une bague extérieure (24) supportée, au moins indirectement, par une lunette mince (33) prolongée radialement vers l'extérieur, jusqu'à un organe de fixation (38) en passant à travers ledit intervalle axial (B) dans une seconde région angulaire (C) autour de l'axe (4) du rouleau (1), **caractérisé en ce que** les segments (6) sont fixés entre eux par leurs flasques intérieurs (7) et **en ce que** le palier intermédiaire (18) est logé radialement à l'intérieur de la paroi périphérique de l'un au moins des segments tubulaires (6).

2. Dispositif de guidage selon la revendication 1, **caractérisé en ce que** les flasques (7) des extrémités adjacentes de deux segments successifs (6) sont fixés l'un à l'autre par plusieurs moyens de fixation (9) répartis angulairement autour de l'axe (4) du rouleau (1).

3. Dispositif de guidage selon la revendication 2, **caractérisé en ce que** l'un des flasques de chaque segment (6) présente un évidement (13) dans le prolongement axial de chaque moyen de fixation (9) associé à l'autre flasque.

4. Dispositif de guidage selon la revendication 3, **caractérisé en ce que** les deux flasques (7) d'un même segment (6) sont similaires mais décalés angulairement l'un par rapport à l'autre autour de l'axe (4) du rouleau (1).

5. Dispositif de guidage selon l'une des revendications 2 à 4, **caractérisé en ce que** les moyens de fixation (9) comprennent des vis.

6. Dispositif de guidage selon l'une des revendications 1 à 5, **caractérisé en ce que** l'un au moins des deux flasques intérieurs (7) fixés l'un à l'autre à la jonction entre deux segments successifs (6) forme un embout cylindrique (8) sur lequel est emmanché la bague intérieure (21) du palier intermédiaire (18) associé.

7. Dispositif de guidage selon l'une des revendications 1 à 5, **caractérisé en ce que** les deux flasques intérieurs (7) fixés l'un à l'autre à la jonction entre deux segments successifs (6) possèdent chacun un embout cylindrique (8) dirigé vers l'autre de ces deux flasques, et **en ce que** la bague intérieure (21) du palier intermédiaire (18) associé est emmanchée simultanément sur les deux embouts (8) en assurant en même temps leur centrage mutuel.

8. Dispositif de guidage selon l'une des revendications 1 à 7, **caractérisé en ce que** la bague intérieure (21) du palier intermédiaire est positionnée axialement, au moins indirectement entre deux épaulements (23) appartenant chacun à l'un des deux flasques intérieurs (7) fixés l'un à l'autre à ladite jonction entre deux segments successifs (6).

9. Dispositif de guidage selon l'une des revendications 1 à 8, **caractérisé en ce qu'**à l'une au moins des extrémités du rouleau (1), un flasque intérieur (7a) appartenant à un segment d'extrémité (6a) est fixé à une bride terminale (14) d'un arbre (16).

10. Dispositif de guidage selon l'une des revendications 1 à 9, **caractérisé en ce qu'**un anneau de support (27) est fixé au pourtour intérieur de la lunette (33), et la bague extérieure (24) du palier intermédiaire (18) est positionnée radialement dans un contre-alésage (26) de l'anneau, et axialement entre un épaulement terminal (28) du contre-alésage (26) et une rondelle d'arrêt (29) fixée dans le contre-alésage.

11. Dispositif de guidage selon l'une des revendications 1 à 10, **caractérisé en ce que** la lunette (33) est en tôle.

12. Dispositif de guidage selon l'une des revendications 1 à 11, **caractérisé en ce que** la lunette (33) présente, entre les parois périphériques des segments tubulaires successifs, une épaisseur maximale de 3mm.

13. Dispositif de guidage selon la revendication 12, **caractérisé en ce que** l'intervalle axial (B) entre deux segments tubulaires successifs (6) est compris entre 2mm et 4mm.

14. Dispositif de guidage selon l'une quelconque des revendications 1 à 13, **caractérisé en ce que** la lunette (33) est engagée dans l'intervalle (B) même dans les régions angulaires qui ne s'étendent pas jusqu'à l'organe de fixation (38).

## Claims

1. A guiding device using a rotary roll, comprising a roll (1) supported in rotation with respect to a frame (2) by means of bearings (18, 18a) and whose outer surface is intended to support a material (3), in particular a textile strip, in a first angular region (A) about the axis (4) of the roll (1), the roll (1) being subdivided into successive coaxial tubular segments (6) having an axial gap (B) between their peripheral surfaces, the bearings comprising, at at least one junction between two adjacent segments (6), an intermediate bearing (18) having an inner ring (21) supported by at least one of two internal flanges (7) provided in the axial ends of the two adjacent segments (6), and an outer ring (24) supported, at least indirectly, by a thin support (33) extended radially outwardly to an attachment number (38) and passing through said axial gap (B) in a second angular region (C) about the axis (4) of the roll (1), **characterized in that** the segments (6) are attached to one another by their internal flanges (7), and **in that** the intermediate bearing (18) is radially housed inside the peripheral wall of at least one of the tubular segments (6).

2. A guiding device according to Claim 1, **characterized in that** the flanges (7) of the adjacent ends of two successive segments (6) are attached to one another by several attachment means (9) distributed angularly about the axis (4) of the roll (1).

3. A guiding device according to Claim 2, **characterized in that** one of the flanges of each segment (6) has an opening (13) in axial alignment with each attachment means (9) associated with the other flange.

4. A guiding device according to Claim 3, **characterized in that** the two flanges (7) of a same segment (6) are similar but angularly offset with respect to one another about the axis (4) of the roll (1).

5. A guiding device according to one of Claims 2 to 4, **characterized in that** the attachment means (9) comprise screws.

6. A guiding device according to one of Claims 1 to 5, **characterized in that** at least one of the two internal flanges (7) attached to one another at the junction between two successive segments (6) forms a cylindrical end piece (8) over which is fitted the inner ring (21) of the associated intermediate bearing (18).

7. A guiding device according to one of Claims 1 to 5, **characterized in that** the two internal flanges (7) attached to one another at the junction beeetween two successive segments (6) each have a cylindrical end piece (8) facing towards the other of these two flanges, and **in that** the inner ring (21) of the associated intermediate bearing (18) is simultaneously fitted over the two end pieces (8) thus ensuring their mutual centring at the same time.

8. A guiding device according to one of Claims 1 to 7, **characterized in that** the inner ring (21) of the intermediate bearing is axially positioned, at least inderictly, between two shoulders (23) each of which is part of one of the two internal flanges (7) attached to one another at said junction between two successive segments (6).

9. A guiding device according to one of Claims 1 to 8, **characterized in that**, at at least one of the ends of the roll (1), an internal flange (7a) which is part of an end segment (6a) is attached to a terminal flange (14) of a shaft (16).

10. A guiding device according to one of claims 1 to 9, **characterized in that** a support collar (27) is attached to the internal periphery of the support (33), and the outer ring (24) of the intermediate bearing (18) is positioned radially in a counter-bore (26) of the collar, and axially between a terminal shoulder (28) of the counter-bore (26) and a stop washer (29) fixed in the counter-bore.

11. A guiding device according to one of Claims 1 to 10, **characterized in that** the support (33) is made of sheet steel.

12. A guiding device according to one of Claims 1 to 11, **characterized in that** the support (33) has, between the peripheral surfaces of the successive tubular segments, a maximum thickness of 3mm.

13. A guiding device according to Claim 12, **characterized in that** the axial gap (B) between two successive tubular segments (6) is between 2mm and 4mm.

14. A guiding device according to any to any one of Claims 1 to 13, **characterized in that** the support (33) is engaged in the gap (B) even in the regions which do not extend to the attachment member (38).

## Patentansprüche

1. Führungseinrichtung mit rotierender Walze, die eine rotierende Walze (1) aufweist, die mit Hilfe von Lagern (18,18a) bezüglich eines Gestells (2) drehbar gelagert ist und deren Außenwand zum Tragen eines Materials (3), insbesondere eines Textilbandes, in einem ersten Winkelbereich (A) um die Achse (4) der Walze (1) bestimmt ist, wobei die Walze (1) in aufeinanderfolgende koaxiale Rohrsegmente (6) unterteilt ist, zwischen deren Umfangswänden ein axialer Zwischenraum (B) besteht, wobei die Lager mindestens an einer Verbindung zwischen zwei benachbarten Segmenten (6) ein Zwischenlager (18) umfassen, das einen Innenring (21) aufweist, der von mindestens einer von zwei Innenwangen (7) getragen wird, die in den axialen Enden der beiden benachbarten Segmente (6) vorgesehen sind, sowie einen Außenring (24), der mindestens indirekt von einer dünnen Scheibe (33) getragen wird, die radial nach außen bis zu einem Befestigungsorgan (38) verlängert ist, indem sie sich in einem zweiten Winkelbereich (C) um die Achse (4) der Walze (1) durch den axialen Zwischenraum (B) erstreckt, **dadurch gekennzeichnet, daß** die Segmente (6) über ihre Innenwangen (7) aneinander befestigt sind und daß das Zwischenlager (18) radial im Inneren der Umfangswand mindestens eines der Rohrsegmente (6) untergebracht ist.

2. Führungseinrichtung nach Anspruch 1, **dadurch gekennzeichnet, daß** die Wangen (7) der benachbarten Enden von zwei aufeinanderfolgenden Segmenten (6) aneinander durch mehrere Befestigungsmittel (9) befestigt sind, die winkelmäßig um die Achse (4) der Walze (1) herum verteilt sind.

3. Führungseinrichtung nach Anspruch 2, **dadurch gekennzeichnet, daß** eine der Wangen jedes Segments (6) in der axialen Verlängerung jedes Befestigungsmittels (9), das der anderen Wange zugeordnet ist, eine Aussparung (13) aufweist.

4. Führungseinrichtung nach Anspruch 3, **dadurch gekennzeichnet, daß** die beiden Wangen (7) ein und desselben Segments (6) ähnlich sind, jedoch um die Achse (4) der Walze (1) winkelmäßig gegeneinander versetzt sind.

5. Führungseinrichtung nach einem der Ansprüche 2 bis 4, **dadurch gekennzeichnet, daß** die Befestigungsmittel (9) Schrauben aufweisen.

6. Führungseinrichtung nach einem der Ansprüche 1 bis 5, **dadurch gekennzeichnet, daß** mindestens eine der beiden an der Verbindung zwischen zwei aufeinanderfolgenden Segmenten (6) aneinander befestigten Innenwangen (7) einen zylindrischen Ansatz (8) bildet, auf den der Innenring (21) des zugeordneten Zwischenlagers (18) aufgesteckt ist.

7. Führungseinrichtung nach einem der Ansprüche 1 bis 5, **dadurch gekennzeichnet, daß** die beiden an der Verbindung zwischen zwei aufeinanderfolgenden Segmenten (6) aneinander befestigten Innenwangen (7) jeweils einen zylindrischen Ansatz (8) aufweisen, der der anderen dieser beiden Wangen zugewandt ist, und daß der Innenring (21) des zugeordneten Zwischenlagers (18) gleichzeitig auf die beiden Ansätze (8) aufgesteckt ist, indem er gleichzeitig ihre gegenseitige Zentrierung gewährleistet.

8. Führungseinrichtung nach einem der Ansprüche 1 bis 7, **dadurch gekennzeichnet, daß** der Innenring (21) des Zwischenlagers axial mindestens indirekt zwischen zwei Schultern (23) positioniert ist, die jeweils zu einem der beiden an der Verbindung zwischen zwei aufeinanderfolgenden Segmenten (6) aneinander befestigten Innenwangen (7) gehören.

9. Führungseinrichtung nach einem der Ansprüche 1 bis 8, **dadurch gekennzeichnet, daß** mindestens an einem der Enden der Walze (1) eine zu einem Endsegment (6a) gehörende Innenwange (7a) an einem Stirnflansch (14) einer Welle (16) befestigt ist.

10. Führungseinrichtung nach einem der Ansprüche 1 bis 9, **dadurch gekennzeichnet, daß** ein Tragring (27) am Innenumfang der Scheibe (33) befestigt ist und der Außenring (24) des Zwischenlagers (18) in einer Gegenbohrung (26) des Tragrings radial und zwischen einer Endschulter (28) der Gegenbohrung (26) und einem in der Gegenbohrung befestigten Blockierring (29) axial positioniert ist.

11. Führungseinrichtung nach einem der Ansprüche 1 bis 10, **dadurch gekennzeichnet, daß** die Scheibe (33) aus Blech besteht.

12. Führungseinrichtung nach einem der Ansprüche 1 bis 11, **dadurch gekennzeichnet, daß** die Scheibe (33) zwischen den Umfangswänden der aufeinanderfolgenden Rohrsegmente eine Höchstdicke von 3 mm besitzt.

13. Führungseinrichtung nach Anspruch 12, **dadurch gekennzeichnet, daß** der axiale Zwischenraum (B) zwischen zwei aufeinanderfolgenden Rohrsegmenten (6) 2 bis 4 mm beträgt.

14. Führungseinrichtung nach einem der Ansprüche 1 bis 13, **dadurch gekennzeichnet, daß** die Scheibe (33) auch in den Winkelbereichen, die sich nicht bis zu dem Befestigungsorgan (38) erstrecken, in den Zwischenraum (B) eintritt.
